# EUROPEAN PATENT APPLICATION

(11) **EP 0 816 705 A1**
(43) Date of publication of application: **07.01.1998**
(21) Application number: 97201764.4
(22) Date of filing: 11.06.1997
(51) Int. Cl.: F16D 43/18

(54) **A centrifugal overload clutch**

(30) Priority: 26.06.1996 NL 1003425
(71) Applicant: MAASLAND N.V., 3155 PD Maasland (NL)
(72) Inventor: van Hemert, Norbert, 3067 CB Rotterdam (NL)
(74) Representative: Mulder, Herman

(57) **Abstract**

A centrifugal clutch comprises a drum-shaped body (1), a supporting element (2) and friction elements (3) movably connected to said supporting element (2) and being under action of spring, which friction elements (3) are capable of being pushed against the inner wall of the drum-shaped body (1) for making a coupling between the drum-shaped body (1) and the supporting element (2). Furthermore there are provided spring elements (5) exerting pressure, as well as centrifugal mass elements (4) being free from the drum-shaped body (1), via which centrifugal mass elements (4) the compressive force of these spring elements (5) is transmitted to the friction elements (3). This enables to transmit part of the moment to be transmitted by means of compression springs (5) and the other part by means of the centrifugal force of the mass elements (4).

## Description

The present invention relates to a centrifugal clutch comprising a drum-shaped body, a supporting element and friction elements movably connected to said supporting element and being under action of spring, which friction elements are capable of being pushed against the inner wall of the drum-shaped body for making a coupling between the drum-shaped body and the supporting element.

Such a clutch is known. The supporting element therein is motor-driven, the friction elements being constituted by centrifugal mass elements which, at a drive having a relatively high number of revolutions, are capable of being pushed, against the action of tension springs, against the inner wall of the drum-shaped body in order to transmit the rotating movement of the supporting element to the drum-shaped body. When such a clutch is included in the drive shaft connection between the power take-off shaft of a tractor and an agricultural implement to be driven, such as a mowing machine, coupled thereto, then, at a relatively low number of revolutions of 540 revolutions per minute, which is usual for a power take-off shaft of a tractor, the mass of the centrifugal elements, required for transmitting a moment of approximately 800 Nm only by friction, will have to be so high that the clutch will become too heavy to be included in the drive shaft connection. Moreover, at said number of revolutions, there will occur a relatively long slip and the friction material applied on the outside of the centrifugal mass elements will burn.

The invention aims at obviating these drawbacks by providing a clutch being capable of transmitting, also at a relatively low number of revolutions, a sufficient moment without seriously damaging the friction material, said clutch still being relatively light. In accordance with the invention, for that purpose the clutch described in the preamble is characterized in that there are provided spring elements exerting pressure, as well as centrifugal mass elements being free from the drum-shaped body, via which centrifugal mass elements the compressive force of these spring elements is transmitted to the friction elements. This enables to transmit part of the moment to be transmitted by means of compression springs and the other part by means of the centrifugal force of the mass elements, the result being that the weight of the mass elements and consequently that of the clutch may be considerably lower. Moreover, by the action of the compression springs, the period in which slip occurs will be reduced to a considerable extent so that the risk of damage of the friction material on the outside of the friction elements will be reduced to a great extent. For the purpose of quietly starting up the implement to be connected to the clutch in the starting phase, the drum-shaped body is motor-driven and the rotating movement thereof can be transmitted to the supporting element to which the implement is capable of being connected.

For a better understanding of the invention, reference will now be made to the accompanying drawings, in which:

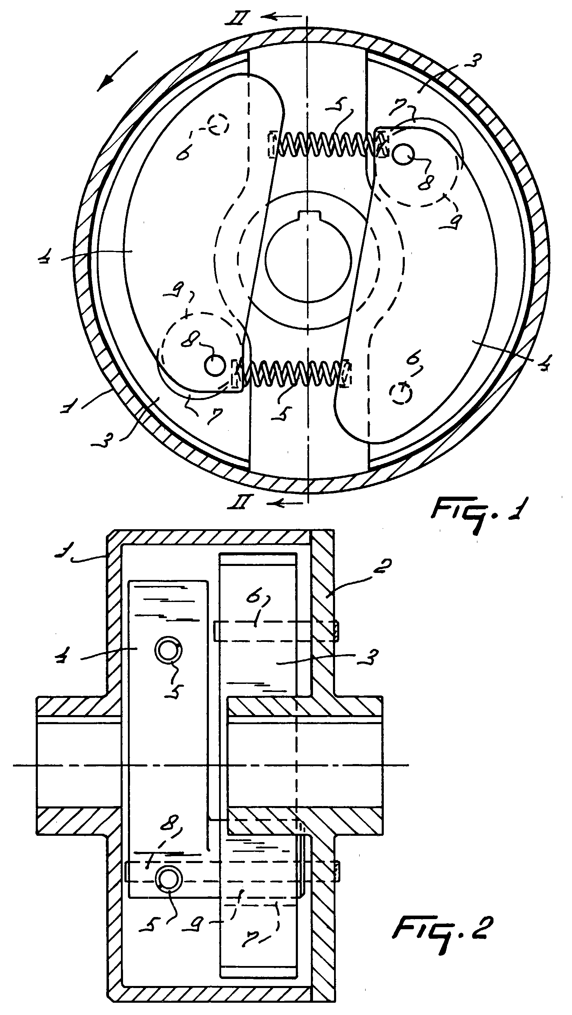

Figure 1 shows schematically a cross-section of the clutch in accordance with the invention, and
Figure 2 shows schematically a longitudinal cross-section of said clutch taken on line II - II in Figure 1.

The embodiment shown in the figures is provided with a drum-shaped body 1 which is motor-driven and capable of being connected for that purpose to e.g. the power take-off shaft of a tractor. By means of the coupling elements to be described hereafter, the rotating movement of the drum-shaped body 1 can be transmitted to a supporting element 2 to which an implement to be driven is capable of being connected. Said coupling elements comprise two friction elements 3 provided on their outsides with a friction material, which friction elements 3 can be pushed against the inner wall of the drum-shaped body 1, two centrifugal mass elements 4 being free from the drum-shaped body and two spring elements 5, which, acting on the centrifugal mass elements 4, are capable of pushing indirectly the friction elements 3 against the drum-shaped body 1. The friction elements 3 are located diametrically opposite each other and are connected at one side, pivotably about respective shafts 6, with the supporting element 2. At their other side the friction elements 3 are provided with approximately oval holes 7. The centrifugal mass elements 4 too are located diametrically opposite each other and are connected, pivotably about respective shafts 8, with the supporting element 2. The coupling between a friction element 3 and a relevant centrifugal mass element 4 is obtained by means of a cylindrical protrusion 9 constituting part of the centrifugal mass element 4, which cylindrical protrusion 9 is located in the approximately oval hole 7 of the relevant friction element 3. Said cylindrical protrusion 9 is located eccentrically relative to the pivot shaft 8. Consequently, the approximately oval hole 7, whose dimensions define the maximum angle of rotation of the relevant centrifugal mass element, also constitutes a limiting element for the movement of the centrifugal mass element 4. The spring elements 5 are designed as compression springs and disposed between the centrifugal mass elements 4. Owing to the fact that, at one side, they engage a mass element in the immediate vicinity of a relevant pivot shaft 8 and, at the other side, they engage the outwardly pivotable end of a mass element, it may be supposed that each spring is capable of pushing one of the centrifugal mass elements 4 outwardly about a respective shaft 8. Due to the eccentricity of the cylindrical protrusion 9 relative to the shaft 8 and the size of the approximately oval hole 7, first the force exerted by the compression springs 5 can be transmitted to the friction elements 3 via the centrifugal mass elements 4 pushed outwardly and subsequently, when the number of revolutions of the supporting element 2 is sufficiently high, the force on the friction elements can further be provided by the centrifugal force of the centrifugal mass elements 4.

For the purpose of quietly starting up an implement to be driven during the starting phase, in the preferred embodiment described there has been opted for a drive of the drum-shaped body 1 instead of a drive of the supporting element 2 including the friction elements 3 and the centrifugal mass elements 4 disposed thereon. In this situation the friction elements 3 have to exert a starting friction moment on the drum-shaped body 1. The friction force required for starting up a connected implement is provided by the compression springs 5. The latter push the centrifugal mass elements 4 outwardly, whereafter the friction elements are pushed against the inside of the drum-shaped body 1. The force of the springs defines what moment will be transmitted during the starting phase. Due to this construction the total moment required does not need to be transmitted by the centrifugal mass elements 4, so that it is possible to reduce the centrifugal moment required, which will result in saving of weight. When the supporting element 2 of the clutch, to which the implement is connected, begins to accelerate in a slipping manner, the mass elements 4 will tend to go outwardly by the centrifugal action. The created centrifugal force, which engages the centre of gravity of the mass elements, will be transmitted to the friction elements via the eccentric construction.

## Claims

1. A centrifugal clutch comprising a drum-shaped body (1), a supporting element (2) and friction elements (3) movably connected to said supporting element (2) and being under action of spring, which friction elements (3) are capable of being pushed against the inner wall of the drum-shaped body (1) for making a coupling between the drum-shaped body (1) and the supporting element (2), characterized in that there are provided spring elements (5) exerting pressure, as well as centrifugal mass elements (4) being free from the drum-shaped body (1), via which centrifugal mass elements (4) the compressive force of these spring elements (5) is transmitted to the friction elements (3).

2. A centrifugal clutch as claimed in claim 1, characterized in that the drum-shaped body (1) is motor-driven and the rotating movement thereof can be transmitted to the supporting element (2) to which an implement to be driven is capable of being connected.

3. A centrifugal clutch as claimed in claim 1 or 2, characterized in that both the friction elements (3) and the centrifugal mass elements (4) are pivotably connected to the supporting element (2) and the coupling between a friction element (3) and a centrifugal mass element (4) is obtained by means of a cylindrical protrusion (9) constituting part of the centrifugal mass element (4), about which cylindrical protrusion (9) the friction element (3) is movable.

4. A centrifugal clutch as claimed in claim 3, characterized in that the cylindrical protrusion (9) is eccentrically pivotably connected to the supporting element (2).

5. A centrifugal clutch as claimed in claim 4, characterized in that the friction element (3) is provided with an approximately oval hole (7) in which the cylindrical protrusion (9) is movable, which approximately oval hole (7) constitutes a limiting element for the movement of the centrifugal mass element (4).

6. A centrifugal clutch as claimed in any one of the preceding claims, characterized in that there are provided two centrifugal mass elements (4) which are pivotable about shafts (8), located diametrically opposite each other and connected to the supporting element (2), while there are provided two compression springs (5) for pushing said centrifugal mass elements (4) outwardly about said shafts (8), and limiting means for preventing the centrifugal mass elements (4) from touching the inner wall of the drum-shaped body (1).

7. A centrifugal clutch as claimed in claim 6, characterized in that the compression springs (5) are active between the centrifugal mass elements (4).

8. A centrifugal clutch as claimed in claim 6 or 7, characterized in that there are provided two friction elements (3) which, at one side, are pivotable about shafts (6), located diametrically opposite each other and connected to the supporting element (2), and which, at the other side, are provided with approximately oval holes (7) constituting the limiting means for the movement of the centrifugal mass elements (4).
